**Europäisches Patentamt**

**European Patent Office**

**Office européen des brevets**

(11) Veröffentlichungsnummer: **0 115 561**
**A1**

(12) **EUROPÄISCHE PATENTANMELDUNG**

(21) Anmeldenummer: 83105861.5

(22) Anmeldetag: 15.06.83

(51) Int. Cl.³: **A 47 J 37/10,** A 47 J 36/06

(30) Priorität: 04.02.83 CH 650/83

(43) Veröffentlichungstag der Anmeldung: 15.08.84
**Patentblatt 84/33**

(84) Benannte Vertragsstaaten: **AT BE CH DE FR GB IT LI LU NL SE**

(71) Anmelder: **Firma Lispa, R. Lichtenstein, Schauenbergstrasse 34, CH-8046 Zürich (CH)**

(72) Erfinder: **Späni, Toni, Sonnenbergstrasse 13, CH-8102 Oberengstringen (CH)**
Erfinder: **Lichtenstein, Rita, Schauenbergstrasse 34, CH-8046 Zürich (CH)**

(74) Vertreter: **Blum, Rudolf Emil Ernst et al, c/o E. Blum & Co Patentanwälte Vorderberg 11, CH-8044 Zürich (CH)**

(54) **Abdeckvorrichtung für ein Kochgefäss.**

(57) Die Vorrichtung enthält eine Haube (1), bestehend aus einer Dachpartie (3) mit einer Öffnung (4), einer Wandpartie (5) und einer Randpartie (6), bestehend aus einem rinnenförmigen Abschnitt (7) und einem abgestuften Abschnitt, die mit einer flachen Teilfläche (8, 9) auf die Oberkante des Randes aufliegend auf ein Kochgefäß aufsetzbar ist.

Die Ausbildung der Randpartie (6) gewährleistet einerseits eine sichere Auflage auf der Pfanne und anderseits ein einwandfreies Abtropfen des Niederschlages.

- 1 -

## Abdeckvorrichtung für ein Kochgefäss
-----------------------------------------

Die vorliegende Erfindung betrifft eine Abdeckvorrichtung für ein Kochgefäss, die eine einstückig ausgebildete Haube mit einer Dachpartie, die eine Oeffnung aufweist, durch welche hindurch das Kochgefäss zugänglich ist, mit einer Wandpartie und mit einer Randpartie, die auf den Rand des Kochgefässes aufsetzbar ist, aufweist.

Aus der CH-PS 385 448 ist eine Hilfsvorrichtung zum Braten und Backen in offener Pfanne bekannt, die eine ringförmige Wandpartie, einen nach innen vorspringenden Rand, der eine Oeffnung freilässt, durch welche das Kochgut zugänglich bleibt, und eine nach innen gerichtete Partie aufweist, die zum Aufsetzen auf den Rand der Pfanne bestimmt ist.

Diese Hilfsvorrichtung hat die Nachteile, dass aufgrund der durch die Ausbildung der nach innen gerichteten Partie geringen Auflagefläche der Hilfsvorrichtung am Rand der Pfanne einerseits keine stabile Lage erzielbar ist und andererseits eine Beschädigung des Randes insbesondere bei beschichteten Pfannen auf Dauer nicht ausgeschlossen werden kann.

Es stellt sich somit die Aufgabe eine Abdeckvorrichtung zu schaffen, welche die angegebenen Nachteile nicht aufweist.

Diese Aufgabe wird erfindungsgemäss mit den kennzeichnenden Merkmalen des Patentanspruches 1 gelöst.

Hb/dp                                                        EU 1160

Bei einer bevorzugten Ausführungsform weist die Vorrichtung einen abgestuften Abschnitt mit zwei im wesentlichen parallel zueinander liegenden Teilflächen auf. Dies hat den Vorteil, dass die Vorrichtung bei Kochtöpfen unterschiedlichen Durchmessers angewendet werden kann.

Vorzugsweise weist der rillenförmige Abschnitt einen U-förmigen Querschnitt auf, um das Abtropfen von der Innenseite der Haube sicherzustellen.

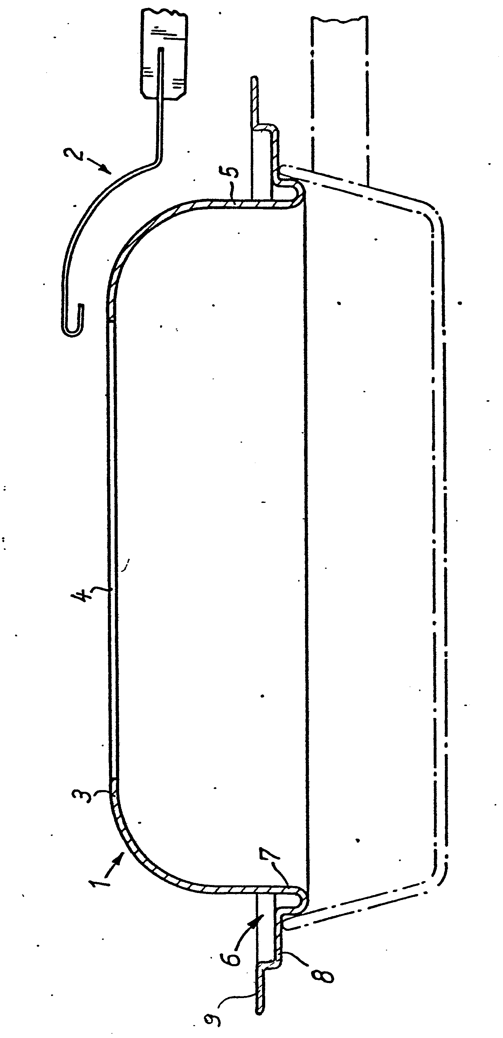

Im folgenden wird ein Ausführungsbeispiel des Erfindungsgegenstandes anhand der beiliegenden Zeichnung erläutert.

Die Zeichnung zeigt einen Querschnitt eines Ausführungsbeispiels der Vorrichtung im aufgesetzten Zustand.

Wie die Figur zeigt, weist die Vorrichtung eine einstückig ausgebildete Haube 1 und einen Griff 2 auf. Die Haube 1 besteht aus einer Dachpartie 3, die eine Oeffnung 1 auf weist, einer Wandpartie 5 und einer Randpartie 6. Der Uebergang zwischen Dachpartie 3 und Wandpartie 5 wird durch einen gewölbten Abschnitt gebildet. Die Oeffnung 4 in der Dachpartie 3 ist so ausgelegt, dass ein Kochtopfdeckel aufgesetzt werden kann.

Die Randpartie 6 wird durch einen an die Wandpartie 5 angrenzenden rinnenförmigen Abschnitt 7 und einen vom rinnenförmigen Abschnitt 7 seitlich abstehenden, abgestuften Abschnitt mit zwei im wesentlichen parallel zueinander liegenden Teilflächen 8,9 gebildet. Der rillenförmige Abschnitt 7 hat einen U-förmigen Querschnitt und ist so ausgebildet, dass der eine Schenkel und die Wandpartie 5 durchgehend ausgebildet sind.

Die dargestellte Haube 1 wird aus Metall hergestellt und einer Oberflächenbehandlung unterzogen. Die Haube 1 kann aber auch aus Kunststoff bestehen. Ferner kann die Haube 1 aus einem Kunststoffkern und einer allseitig aufgebrachten Metallschicht bestehen.

Wie aus der Figur ersichtlich, wird die Haube 1 auf eine Pfanne so aufgesetzt, dass eine Teilfläche 8,9

0115561

der Randpartie 6 auf der Oberkante des Pfannenrandes aufliegt und der rillenförmige Abschnitt 7 innerhalb der Pfanne liegt. Dadurch wird das Abtropfen des beim Kochen entstehenden Niederschlages an der Innenseite der Haube gewährleistet.

Neben der dargestellten Ausbildung der Wandpartie
5 kann diese Wandpartie 5 auch konisch ausgebildet sein,
so dass sie sich in Richtung der Dachpartie 3 verjüngt.

P a t e n t a n s p r ü c h e
-------------------------------

1. Abdeckvorrichtung für ein Kochgefäss, die eine einstückig ausgebildete Haube mit einer Dachpartie, die eine Oeffnung aufweist, durch welche hindurch das Kochgefäss zugänglich ist, mit einer Wandpartie und mit einer Randpartie, die auf den Rand des Kochgefässes aufsetzbar ist, aufweist, dadurch gekennzeichnet, dass die Randpartie einen an die Wandpartie angrenzenden rinnenförmigen Abschnitt (7) und einen vom rinnenförmig ausgebildeten Abschnitt (7) seitlich abstehenden Abschnitt (8) aufweist, der auf der Oberkante des Kochgefässrandes auflegbar ist.

2. Vorrichtung nach Anspruch 1, dadurch gekennzeichnet, dass der seitlich abstehende Abschnitt (8,9) ein   flacher Abschnitt (8) ist.

3. Vorrichtung nach Anspruch 1, dadurch gekennzeichnet, dass der seitlich abstehende Abschnitt (8,9) ein abgestufter Abschnitt mit zwei im wesentlichen parallel zueinander liegenden Teilflächen (8,9) ist.

4. Vorrichtung nach Anspruch 1, dadurch gekennzeichnet, dass der rinnenförmige Abschnitt (7) einen U-förmigen Querschnitt hat.

5. Vorrichtung nach Anspruch 4, dadurch gekennzeichnet, dass ein Schenkel des U-förmigen Abschnittes (7) und die Wandpartie (5) durchgehend ausgebildet sind.

6. Vorrichtung nach Anspruch 1, dadurch gekennzeichnet, dass die Wandpartie (5) konisch ausgebildet ist und sich in Richtung der Dachpartie (3) verjüngt.

7. Vorrichtung nach Anspruch 1, dadurch gekennzeichnet, dass die Oeffnung (4) in der Dachpartie ausgebildet ist, um einen Kochgefässdeckel aufzusetzen.

8. Vorrichtung nach Anspruch 1, gekennzeichnet, durch einen Griff (2) mit einem hakenförmigen Abschnitt, der an der Dachpartie (3) ansetzbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-1 867 994 (WISENOR u.a.) <br> * Insgesamt * | 1,2,4,7 | A 47 J 37/10 <br> A 47 J 36/06 |
| X | FR-A-1 074 927 (FAVRIEL) <br> * Insgesamt * | 1,2,4,5,7 | |
| Y | US-A-1 413 579 (GILL) <br> * Figur 2 * | 1,2,4,5 | |
| D,Y | CH-A- 385 448 (WINKLER) <br> * Insgesamt * | 1,8 | |
| X | US-A-1 862 778 (VOUGHT) <br> * Figur 1 * | 1,4,5 | RECHERCHIERTE SACHGEBIETE (Int. Cl. ³) |
| X | US-A-2 002 237 (ROLAND) <br> * Figur 2 * | 1,2,4,5,6 | A 47 J |
| A | FR-A- 526 607 (BERNAUDIN) <br> * Figur 2 * | 3 | |
| A | CH-A- 232 863 (FREY) <br> * Figur 3 * | 3 | |

Der vorliegende Recherchenbericht wurde für alle Patentansprüche erstellt.

| Recherchenort <br> DEN HAAG | Abschlußdatum der Recherche <br> 27-04-1984 | Prüfer <br> SCHARTZ J. |
|---|---|---|